Europäisches Patentamt

European Patent Office

Office européen des brevets

(19)

(11) Numéro de publication: **0 315 495**
**A1**

(12) **DEMANDE DE BREVET EUROPEEN**

(21) Numéro de dépôt: **88401357.4**

(22) Date de dépôt: **03.06.88**

(51) Int. Cl.⁴: **G 02 C 3/00**

(30) Priorité: **06.11.87 FR 8715392**

(43) Date de publication de la demande:
**10.05.89 Bulletin 89/19**

(84) Etats contractants désignés:
**AT CH DE ES FR GB IT LI**

(71) Demandeur: **Galey, Paul**
**48 Rue de Longchamp**
**F-75116 Paris (FR)**

(72) Inventeur: **Galey, Paul**
**48 Rue de Longchamp**
**F-75116 Paris (FR)**

(74) Mandataire: **Jacquelin, Marc-Henri et al**
**Cabinet PLASSERAUD 84, rue d'Amsterdam**
**F-75009 Paris (FR)**

(54) **Dispositif de lunettes.**

(57) Il s'agit de lunettes du type lunettes de soleil comprenant un écran (1) de protection des yeux d'un utilisateur et des moyens de support (5) et de maintien dudit écran devant le visage de l'utilisateur, lesdits moyens de support étant agencés pour enserrer tout ou partie de la tête de l'utilisateur. L'écran (1) comporte deux parties latérales (3), chacune fixée aux dits moyens de support, respectivement en un point (6, 13, 20) correspondant sensiblement à chacune des tempes de l'utilisateur, et une partie centrale (2) de protection des yeux reliant les deux parties latérales (3) entre elles, située entièrement à distance du visage (11) de l'utilisateur, de sorte que ladite partie centrale (2) n'appuie pas sur le nez (12), le visage (11) ou les côtés de la tête de l'utilisateur.

FIG.6.

# Description

## Dispositif de lunettes

La présente invention concerne des lunettes du type lunettes de soleil comprenant un écran de protection des yeux d'un utilisateur et des moyens de support et de maintien de l'écran devant le visage de l'utilisateur, les moyens de support étant agencés pour enserrer tout ou partie de la tête de l'utilisateur. De telles lunettes permettent de maintenir de façon stable et en différentes positions possibles des lunettes sur la tête de l'utilisateur sans que la face avant, ou écran, de ces lunettes appuie ou vienne en contact avec une partie quelconque du visage du porteur.

Traditionnellement, les lunettes usuelles comportent une monture destinée à les positionner et les maintenir devant les yeux.

Cette monture appuie par sa façade avant, ou partie centrale de la monture, sur le nez, au voisinage immédiat du visage et repose par ses branches latérales sur le dessus des attaches des oreilles avec le crâne.

On connait aussi (US-3 944 344) des montures dont les branches sont à une distance mutuelle telle qu'elles pincent légèrement le crâne entre elles au niveau des tempes et des oreilles et d'autres (US-3 957 361), par exemple pour le sport, dont les extrémités comportent des moyens élastiques on de mise en pression appliquant fortement la façade avant contre le visage.

Cet appui des montures sur le nez ou la racine du nez occasionne des marques et même des irritations et de la gêne à la longue et/ou cette position du ou des verres de la monture près du visage provoque, en cas de transpiration, de la buée très gènante.

D'autre part, ces montures, n'ont été prévues que pour avoir une seule position, relativement stable, d'utilisation, ce qui nécessite de fréquentes manipulations pour les ôter, les ranger, les remettre suivant la nécessité ou non de les utiliser, ces manipulations provoquant des déformations des branches et accroissant le risque de casse souvent au niveau des articulations.

Le dispositif, selon l'invention, permet d'éliminer ces inconvénients.

Ce résultat est obtenu du fait que le dispositif de lunettes est consitué de deux éléments, le premier dit monture ou écran, et le deuxième dit moyens de support et de maintien. L'élément écran comporte une façade, ou partie centrale, destinée à venir en avant du visage de l'utilisateur sans le toucher, constituant ou supportant le ou les verres de lunettes, et deux branches ou parties latérales, destinées à s'étendre de chaque côté des tempes, venant se raccorder par leurs extrémités à chaque côté du deuxième élément que sont les moyens de support, sensiblement au niveau des tempes, ces moyens de supports, ou support, épousant la forme du crâne, s'étendant vers l'avant pour venir s'appuyer sur les tempes et sur tout ou partie du front et s'étendant vers l'arrière sur les côtés du crâne pour venir, en passant au-dessus des oreilles, appuyer soit sur l'arrière des oreilles, soit élastiquement sur les parties du crâne situées à l'arrière des oreilles, ces points d'appui assurant le maintien stable du support sur la tête, qu'il soit horizontal, ou avec la partie avant relevée vers le haut du front.

Ce support supporte donc le poids de l'écran et assure son maintien, ce qui permet alors de prévoir des branches ou parties latérales de l'écran pour éloigner sa façade du visage et du nez car elle n'a plus la nécessité de venir s'y appuyer comme dans le cas des montures de lunettes usuelles.

L'invention vis donc à fournir des lunettes répondant mieux que celles antérieurement connues aux exigences de la pratique, notamment en ce qu'elles permettent d'éviter les marques et irritations occasionnées par les montures classiques, elles permettent une bonne ventilation de l'écran, ce qui évite en cas de température extérieure basse et/ou de transpiration, la formation de buée, en ce qu'elles permettent une protection, par exemple solaire, tout en conservant une paire de lunettes, par exemple correctrices, et en ce qu'elles peuvent être réalisées de façon aisée et à faible coût.

Dans ce but, l'invention propose notamment des lunettes du type lunettes de soleil comprenant un écran de protection des yeux d'un utilisateur et des moyens de support et de maintien dudit écran devant le visage de l'utilisateur, agencés pour enserrer tout ou partie de la tête de l'utilisateur, caractérisées en ce que l'écran comporte deux parties latérales, chacune fixée aux dits moyens de support, respectivement en un point correspondant sensiblement à chacune des tempes de l'utilisateur, et une partie centrale de protection des yeux reliant les deux parties latérales entre elles, située entièrement à distance du visage de l'utilisateur de sorte que ladite partie centrale n'appuie pas sur le nez, le visage ou les côtés de la tête de l'utilisateur. De façon avantageuse, les parties latérales sont fixées chacune aux dits moyens de support de façon pivotante avec frottement.

Dans des modes avantageux de réalisation on a en outre recours à l'une et/ou à l'autre des dispositions suivantes :
- l'écran et les moyens de support sont réalisés en une seule pièce, en plastique transparent, faite en une seule opération de moulage par injection, ce plastique pouvant être teinté dans le cas de lunettes solaires ;
- l'écran est réalisé en une seule pièce, en matière plastique flexible, transparente et teintée, venant se raccorder par ses parties latérales aux moyens de support en matière non tranparente, la longueur de l'écran et sa flexibilité permettant de lui donner le galbe nécessaire en venant se raccorder sur les côtés des moyens de support, avec une avancée suffisante pour ne pas toucher le visage ou le nez. L'écran réalisé en une seule pièce peut être galbé par thermoformage avant d'être assemblé sur les moyens de support ;
- les moyens de support sont constitués d'une barrette ou élément flexible cintré ou moulé en forme de U dont les branches s'incurvent l'une vers l'autre par leurs extrémités et sont à une distance mutuelle telle qu'elles viennent appuyer élastiquement sur les tempes et les parties du crâne situées à l'arrière des oreilles, cet appui élastique de l'arrière des branches ayant tendance à ramener en arrière la partie frontale de l'élément afin de l'appliquer légèrement contre le front de l'utilisateur ou, suivant le galbe de cette partie frontale, contre les bords du front au niveau des tempes et assurer ainsi le maintien stable des moyens de support ;

- les extrémités arrières des moyens de support sont élargies afin d'assurer un meilleur appui et peuvent même être raccordées l'une à l'autre par une bande élastique ou règlable permettant d'appliquer plus fortement les extrémités du support contre le crâne ;

- les lunettes, complètement souples, pouvant se rouler sur elles-mêmes ou se rabattre sur elle-mêmes par leurs extrémités pour être rangées dans un étui, une boîte ou dans la poche, en utilisant pour les moyens de support un ruban ou une bande, souple ou élastique, dont les extrémités sont, par exemple, munies d'un moyen permettant de les raccorder l'une à l'autre, tel que bande "Velcro" (marque déposée), pression ou agrafe, l'écran étant lui-même souple, fait d'une feuille de plastique transparente, teintée, mince et souple, découpée à la forme désirée ;

- pour plus de confort et une tenue encore améliorée, la partie frontale des moyens de support peut comporter un ou plusieurs bourrelets ou une bande de mousse faisant appui sur le front ou ses côtés. Chaque extrémité des parties latérales de l'écran est articulée sur chaque côté ou branche latérale du support, sensiblement au niveau des tempes, par un axe transversal, sensiblement horizontal, tel qu'un rivet faisant axe pour l'articulation et assurant un frottement suffisant, par la pression qu'il exerce en assemblant les deux parties l'une contre l'autre, pour empêcher le basculement de la monture sous son propre poids. Cette articulation permet ainsi à l'utilisateur de modifier la position de la façade avant de la monture, sans toucher au support, en la faisant pivoter vers le haut pour la mettre en position d'attente d'utilisation, puis vers le bas devant les yeux quand il en ressent la nécessité ;

- les parties latérales de l'écran comportent chacune un élément intermédiaire destiné à permettre le règlage de la distance entre la partie centrale de l'écran et le visage de l'utilisateur, cet élément intermédiaire assurant alors la liaison articulée entre l'écran et chaque côté ou branche latérale des moyens de support, cet élément de chaque partie latérale de l'écran pouvant par exemple coulisser sur chaque branche latérale du support ou étant articulé directement sur chaque branche latérale du support, en permettant à chaque partie latérale de l'écran de coulisser dedans ou dessus;

- l'élément intermédiaire est constitué d'une plaquette munie de deux lumières espacées l'une de l'autre dans lesquelles peut être introduit un ruban souple constituant le support, cette plaquette étant percée d'un trou, entre les deux lumières, de façon à être traversée par le rivet destiné à assurer l'articulation entre la partie latérale correspondante de l'écran et cette plaquette ;

- l'élément intermédiaire est constitué d'une plaquette percée d'un trou à une extrémité et dont l'autre extrémité, vers l'avant, est repliée longitudinalement de chaque côté pour former un morceau de profilé en forme de C aplati dans lequel peut coulisser la partie extrême de la partie latérale de l'écran, le resserrage du profilé permettant d'assurer le blocage de la branche dans la position voulue ;

- les lunettes comportent de plus des moyens de blocage du pivotement de l'écran par rapport aux moyens de support, ces moyens de blocage étant par exemple constitués par des moyens de fixation du type "Velcro".

L'invention sera mieux comprise à la lecture de la description qui suit de modes particuliers de réalisation, donnés à titre d'exemples non limitatifs. La description se réfère aux dessins qui l'accompagnent, dans lesquels :

- la **figure 1** est une vue de côté d'un mode de réalisation des lunettes selon l'invention, réalisées en une seule pièce, représenté à la fois en position d'utilisation devant les yeux et en position d'attente en haut sur le front, sur la tête d'un utilisateur ;

- la **figure 2** est une vue de dessus des lunettes de la figure 1 ;

- la **figure 3** est une vue de côté, toujours sur la tête d'un utilisateur, d'un autre mode de réalisation des lunettes selon l'invention, l'écran étant monté de façon pivotante sur les moyens de support et de maintien;

- la **figure 4** est une vue de côté d'un autre mode de réalisation règlable et proche de celui de la figure 3 ;

- la **figure 5** est encore un autre mode de réalisation des lunettes selon l'invention, les moyens de support étant constitués par un bandeau et l'écran étant monté de façon pivotante et coulissante sur lesdits moyens de support ;

- les **figures 6 et 7** montrent un autre mode de réalisation préféré de l'invention où les moyens de support sont constitués par un bandeau en matière élastique d'une certaine largeur, l'écran étant monté de façon pivotante et règlable en distance par rapport au visage ; des moyens de blocage de l'écran sur lesdits moyens de support sont également prévus.

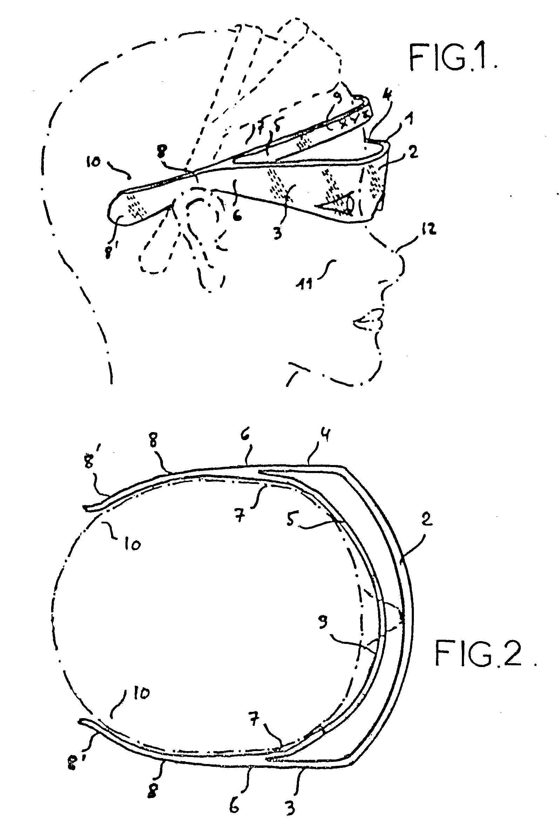

Les lunettes, réalisées en une seule pièce et représentées aux figures 1 et 2 montrent la monture, ou écran, dont la façade avant, ou partie centrale, 2 galbée en forme de U se raccorde en 6 par ses parties latérales 3, aux moyens de support 5 eux-mêmes galbés en forme de U dont la face frontale 9 se prolonge sur chaque côté par une branche 8 commune à l'ensemble des lunettes, chaque branche 8 étant incurvée en correspondance avec la forme du crâne pour venir s'appuyer élastiquement par son extrémité 8' sur la partie du crâne 10, située à l'arrière de l'oreille, et s'appliquer contre les tempes et le début du front de chaque côté en 7, la partie frontale 9 pouvant ainsi être galbée pour plus de confort, tandis que la façade avant 2 de la monture, éloignée du front, ne touche ni le visage 11 ni le nex 12.

Les branches 8, galbées à la forme du crâne, sont à une distance mutuelle telle qu'en les écartant l'une de l'autre pour les mettre en place sur la tête, ce qui permet la flexibilité du support 5 et de l'écran 1, elles viennent pincer légèrement le crâne et appuyer par leurs extrémités 8', incurvées l'une vers l'autre, sur la partie convexe du crâne à l'arrière des oreilles, ce qui assure en même temps l'appui de deux parties latérales des moyens de support sur les tempes et le début du front. De ce fait, l'ensemble est rendu stable quelle que soit la position des moyens de support 5, à l'horizontale ou incliné haut sur le front comme figuré en pointillé. Pour un meilleur appui, la partie arrière 8' des branches peut être élargie.

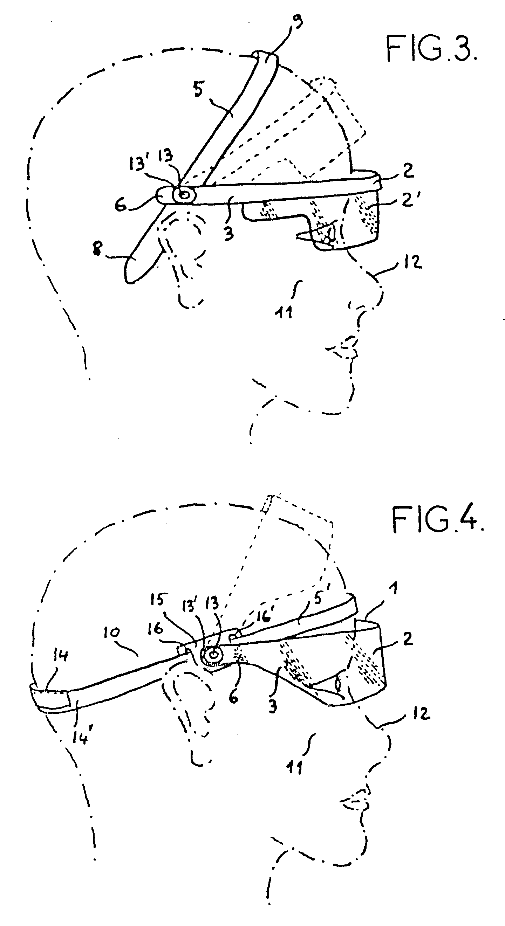

La monture, ou écran, de lunettes représentée à la figure 3 comporte une façade constituée d'une barrette 2 et d'un verre unique organique 2', galbé comme la barrette en forme de U, fixé à la barrette et s'étendant vers le bas, à partir de la barette 2, devant les yeux du proteur. Ni la barrette 2, ni le verre 2' ne viennent appuyer sur le nez ou le visage du porteur.

La barrette 2 de la monture est articulée sur les moyens de support 5, constitués d'une barette flexible en forme de U analogue à celle de la figure 1 mais séparée de la monture 1, directement par un axe transversal 13 tranversant les moyens de support 5, sur ses côtés à hauteur des tempes au-dessus des oreilles, et l'extrémité 6 des parties latérales 3 de l'écran.

Sur la figure 4, la monture 1 représentée, constituée d'une feuille de plastique souple 2 découpée à la forme désirée, est articulée par un moyen intermédiaire 15 sur les moyens de support constitués dans cette réalisation d'un ruban souple 5' dont les extrémités 14 et 14' se raccordent entre elles derrière la tête. Ce moyen intermédiaire est fait d'une plaquette 15, munie de deux lumières 16 et 16' par où passe les moyens de support souple 5', un rivet 13 réunissant chaque extrémité 6 des parties latérales 3 de la monture à la plaquette 15, ce rivet 13 servant d'axe d'articulation et de moyen de frottement.

On remarque donc que la façade avant ou partie centrale 2 de chaque écran, illustrée sur les figures 1, 2 et 3 est à une distance du visage déterminée par la longueur fixe des parties latérales 3, tandis que la façade avant 2 de la monture illustrée sur la figure 4 peut être positionnée à une distance du visage règlable grâce au coulissement des plaquettes 15, situées de chaque côté de la tête, sur le support 5'.

A la figure 3 comme à la figure 4 est représenté l'écran 1 en position devant les yeux et en pointillé en position d'attente relevée sur le haut du front, cette position étant obtenue par simple pivotement autour des axes d'articulation 13 servant au raccordement de chaque extrémité des parties latérales 3 aux moyens de support 5 ou de coulissement 15 sur les moyens de support 5', les moyens de support, eux, restant fixes.

Cet axe d'articulation 13 transversal, tel qu'un rivet, fait aussi office de moyen de frottement mais peut être complété par deux rondelles d'appui 13' situées sous les têtes du rivet 13 afin de consolider l'articulation et assurer une plus grande surface de frottement de la partie fixe de l'articulation, c'est à dire les moyens de support 5 ou la plaquette 15, une fois mis en place sur la tête de l'utilisateur.

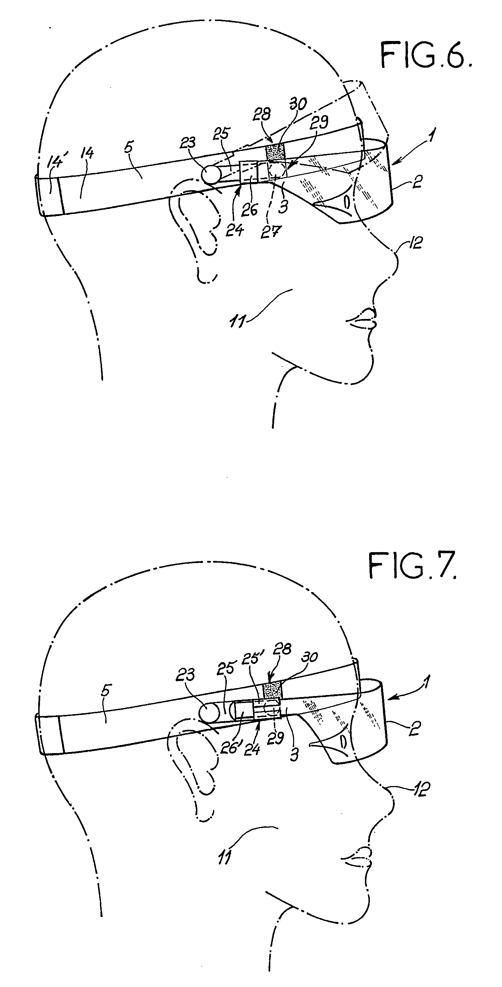

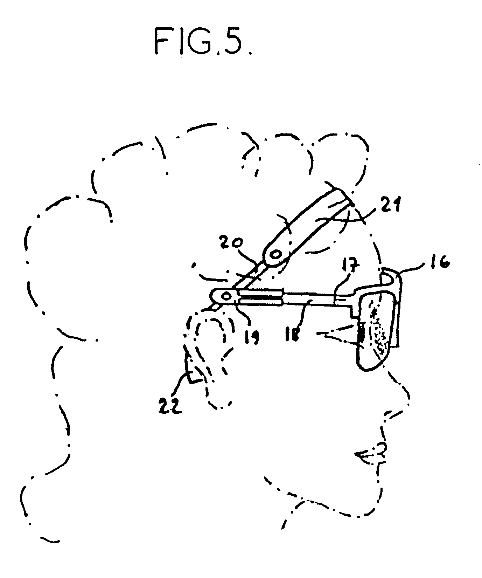

A la figure 5 sont représentées des lunettes en position d'utilisation sur la tête du porteur, constituées d'une monture de lunette usuelle 16 constituant l'écran de protection ou de correction des yeux de l'utilisateur, articulée de chaque côté de sa façade par une charnière 17 sur chacune de ses branches 18.

Chaque extrémité des branches 18 coulisse dans un logement constitué par les bords repliés sur eux-mêmes d'un élément intermédiaire 19 articulé par son extrémité arrière sur le côte du support par un axe transversal constitué aussi dans cet exemple par un rivet. Les moyens de support, dans cette réalisation, sont constitués de deux branches latérales 20 raccordées à l'avant par une bande souple élastique 21 appuyant sur le front et dont les extrémités arrières 22 recourbées vers le bas peuvent venir s'accrocher derrière les orielles grâce à l'élasticité de la bande frontale 21.

Cette réalisation permet donc le pivotement de la monture et le règlage de la distance de la monture par rapport au visage mais aussi de pouvoir plier le dispositif, comme une paire de lunettes usuelles, pour pouvoir le ranger.

Les figures 6 et 7 montrent un mode préféré de réalisation de l'invention. Les moyens de support 5 sont constitués par une bande en matériau élastique d'une certaine largeur, par exemple de l'ordre de 4 cm, qui peut être d'une pièce mais qui est avantageusement de longueur règlable, avec deux extrémités 14, 14' se raccordant entre elles derrière la tête et se fixant l'une sur l'autre par des moyens connus en soi, par exemple du type connu sous la dénomination "Velcro" (marque déposée). L'écran 1 est fixé de chaque côté de la tête sur les moyens de support 5 de façon pivotante et amovible en 23, par exemple par des moyens de fixation permettant un pivotement avec frottement du type bouton-pression en matière plastique. Chaque partie latérale 3 de l'écran comprend un élément de règlage 24 de la distance de la partie centrale 2 de l'écran 1 par rapport au visage 11 de l'utilisateur.

La figure 6 montre un tel élément de règlage 24, comprenant une languette 25 fixée de façon pivotante en 23 sur les moyens de support 5 et propre à glisser intérieurement dans une portion 26 fixée au reste de la partie latérale correspondante 3 reliée à la partie centrale 2, de façon à permettre le rapprochement ou l'éloignement par rapport au visage de ladite partie centrale 2 par simple glissement de la languette 25 dans la portion 26. Cette portion 26 peut être, par exemple, constituée par un morceau de profilé en forme de C aplati dans lequel coulisse la languette. Cette languette est par ailleurs munie, du côté de la partie centrale de l'écran, d'un moyen de butée 27 empêchant la languette de se désolidariser de la portion 26 de l'écran.

Sur la figure 7 on a représenté une variante de l'élément 24 de règlage de la distance de l'écran par rapport au visage de l'utilisateur. La languette 25 comporte un curseur 25', par exemple constitué par un morceau de profilé en C aplati, dans lequel glisse une portion allongée 26' de la partie latérale.

De façon avantageuse, des moyens de blocage 28 du pivotement de l'écran par rapport aux moyens de support 5 sont prévus ; ils sont par exemple constitués par des boutons-pression ou des moyens du type "Velcro". Ces moyens de blocage sont prévus de part et d'autre de l'écran et placés respectivement à proximité de deux points de raccordement 23 de l'écran sur les moyens de supports 5. Ils sont constitués par deux fixations comprenant chacune une partie 29 (par exemple crochets "Velcro") solidaire d'une partie latérale 3 correspondante de l'écran (par exemple fixée par collage sur l'extrémité située du côté de la partie centrale de l'écran, de la languette 25) et par une autre partie 30 (par exemple boucles "Velcro") d'une certaine longueur (par exemple de la largeur des moyens de support) fixée transversalement sur la largeur du bandeau constituant les moyens de support 5, de façon à être située en vis-à-vis de ladite première partie 29, que l'écran soit situé en face des yeux de l'utilisateur, ou relevé au-dessus de ses yeux, de sorte que par simple pression ou arrachage des parties latérales de l'écran 1 par l'utilisateur, l'écran 1 soit bloqué ou débloqué en rotation par rapport aux moyens de support 5.

Les lunettes selon l'invention peuvent être utilisées quelle que soit la destination des lunettes, qu'il s'agisse notamment de lunettes correctrices, de lunettes de soleil ou d'accessoire de mode. Elles peuvent être également utilisées, avec les modes de réalisation donnés en exemple sur les figures 1, 2, 3, 4 et 5 comme lunettes servant de support publicitaire, la publicité apparaissant sur 1 partie frontale 9 du support comme illustré sur la figure 1 par les lettres X Y Z.

Une autre application intéressante du dispositif selon l'invention est la possibilité du port de lunettes pour les personnes au nez très sensible et à celles qui ont le nez très aplati.

Une application certainement très intéressante est l'utilisation de ce dispositif de lunettes pour la pratique de nombreux sports du fait de son maintien stable.

**Revendications**

1. Lunettes du type lunettes de soleil comprenant un écran (1) de protection des yeux d'un utilisateur et des moyens de support (5) et de maintien dudit écran devant le visage de l'utilisateur, lesdits moyens de support étant agencés pour enserrer tout ou partie de la tête de l'utilisateur, caractérisées en ce que l'écran (1) comporte deux parties latérales (3), chacune fixée aux dits moyens de support, respectivement en un point (6, 13, 23) correspondant sensiblement à chacune des tempes de l'utilisateur, et une partie centrale (2) de protection des yeux reliant les deux parties latérales (3) entre elles, située entièrement à distance du visage (11) de l'utilisateur, de sorte que ladite partie centrale (2) n'appuie pas sur le nez (12), le visage (11) ou les côtés de la tête de l'utilisateur.

2. Lunettes selon la revendication 1, caractérisées en ce que les parties latérales (3) sont fixées de façon pivotante, et avec frottement, aux moyens de support (5).

3. Lunettes selon l'une quelconque des revendications 1 et 2, caractérisées en ce que les moyens de support (5) sont constitués par un bandeau en matériau souple ou élastique.

4. Lunettes selon la revendication 3, caractérisées en ce que le bandeau est de longueur règlable.

5. Lunettes selon l'une quelconque des revendications 1 et 2, caractérisées en ce que les moyens de support sont constitués par un élément flexible comprenant une partie frontale (9), propre à coopérer avec le front de l'utilisateur, et deux branches (8) symétriques latérales, reliées entre elles par ladite partie frontale, s'incurvant l'une vers l'autre et agencées pour venir respectivement s'appuyer élastiquement sur chacun des côtés postérieurs (10) de la tête de l'utilisateur.

6. Lunettes selon la revendication 5, caractérisées en ce que les moyens de support (5) sont réalisés en une seule pièce, en plastique relativement flexible, faite en moulage par injection.

7. Lunettes selon l'une quelconque des revendications 1 et 2, caractérisées en ce que les moyens de support sont constitués par un élément comprenant une partie frontale (21), agencée pour épouser la forme du front de l'utilisateur, et deux branches latérales (20) reliées entre elles par la partie frontale, sensiblement parallèles, et dont les extrémités (22) respectives sont recourbées vers le bas pour s'accrocher derrière les orielles de l'utilisateur.

8. Lunettes selon l'une quelconque des revendications précédentes, caractérisées en ce que les parties latérales de l'écran sont fixées de façon amovible aux dits moyens de support.

9. Lunettes selon l'une quelconque des revendications précédentes, caractérisées en ce qu'elles comportent de plus des moyens (28) de blocage du pivotement de l'écran par rapport aux moyens de support.

10. Lunettes selon la revendication 9, caractérisées en ce que les moyens de blocage du pivotement sont constitués par deux fixations du type "Velcro", chaque fixation étant placée respectivement à proximité d'une tempe de l'utilisateur et comprenant une première partie (3) solidaire des moyens de support (5) et une deuxième partie (29), solidaire de la partie latérale (3) de l'écran située en vis-à-vis, et agencée pour coopérer avec ladite première partie de sorte que par simple pression ou arrachage des parties latérales de l'écran sur les moyens de support, ledit écran puisse être bloqué ou débloqué dans la position désirée.

11. Lunettes selon l'une quelconque des revendications précédentes, caractérisées en ce que chaque partie latérale (3) comprend un élément (24) de réglage de la distance de la partie centrale de l'écran par rapport au visage de l'utilisateur.

12. Lunettes selon la revendication 11, caractérisées en ce que l'élément de règlage est constitué par une languette (25) fixée de façon pivotante sur les moyens de support (5) et agencée pour coopérer par glissement avec une portion (26) correspondante d'une partie latérale (3) reliée à la partie centrale (2) de l'écran.

13. Lunettes selon l'une quelconque des revendications précédentes, caractérisées en ce que l'écran (1) de protection des yeux est formé par une feuille de plastique teintée souple ou flexible découpée ou moulée à la forme désirée.

FIG.1.

FIG.2.

FIG.3.

FIG.4.

FIG.6.

FIG.7.

# FIG.5.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 085 536  (J.E.F. PARTY)<br>* Revendications *<br>--- | 1,5 | G 02 C    3/00 |
| Y | US-A-4 152 051  (J.S. VAN TIEM)<br>* Colonne 1, lignes 34-44; revendication 1 *<br>--- | 1,3,5, 10 | |
| Y | FR-A-2 058 730  (D. BERDUCONE)<br>* Page 2, lignes 24-35; page 3 *<br>--- | 1-5,7 | |
| A | FR-A-1 456 918  (A. MAGAGNINI)<br>* Page 1 *<br>--- | 1,2,7 | |
| A | FR-A- 986 716  (J.F. BALZEAU)<br>* Page 1 *<br>--- | 1,2,7 | |
| A | US-A-4 549 793  (J.B. YOON)<br>* Résumé *<br>--- | 1,3,5, 10 | |
| A | FR-A-2 292 990  (S.A.M. STARAGE)<br>* Page 2, lignes 26-32 *<br>--- | 1,2,7 | **DOMAINES TECHNIQUES RECHERCHES (Int. Cl.4)** |
| A | FR-A-2 031 903  (M. GIROD)<br>* En entier *<br>----- | 1,7 | G 02 C    3/00<br>G 02 C    3/02 |

Le présent rapport a été établi pour toutes les revendications

| Lieu de la recherche | Date d'achèvement de la recherche | Examinateur |
|---|---|---|
| LA HAYE | 13-02-1989 | CALLEWAERT-HAEZEBROUCK H |